# EUROPEAN PATENT APPLICATION

(11) **EP 0 699 388 A2**
(43) Date of publication of application: **06.03.1996**
(21) Application number: 95112593.9
(22) Date of filing: 10.08.1995
(51) Int. Cl.: A01K 5/00, A01F 29/00

(54) **Truck for breaking up, shredding, mixing and distributing bales of forage or silage**

(30) Priority: 31.08.1994 IT PD940150
(71) Applicant: ZAGO S.r.l., I-35010 Campo San Martino (Padova) (IT)
(72) Inventor: Zago, Lino, I-35010 Campo San Martino (Padova) (IT)
(74) Representative: Modiano, Guido, Dr.-Ing.

(57) **Abstract**

An improved truck for breaking up, shredding, mixing, and distributing cylindrical and/or prism-shaped bales of forage and straw or grass ensiled products, comprising a chassis that is movable by means of wheels and on which a hopper-like container is placed; a plurality of screw feeders are coupled inside the container so as to be rotatable about corresponding ends. The improved truck is characterized in that at least one of the screw feeders has two regions the respective helical blades whereof have mutually opposite winding directions.

## Description

The present invention relates to an improved truck for breaking up, shredding, mixing, and distributing cylindrical and/or prism-shaped bales of forage and straw or grass ensiled products.

Mixing trucks are currently known in which the basic structure comprises a hopper-like container inside which rotating screw feeders are arranged longitudinally to said container; said screw feeders break up, shred, and mix the material with protein integrators, floury components, or other products, preparing the fodder for the cattle.

In particular, two of said rotating screw feeders are arranged in a downward region with respect to the container and convey the material longitudinally to said container from one side to the other, whereas some of said screw feeders, arranged in upper regions of the container, likewise convey the material longitudinally but in the opposite direction.

Both the lower screw feeders and the upper screw feeders are placed in regions adjacent to the internal surface of the hopper-like container; in particular, the lower screw feeders are located proximate to the bottom of said container, whereas the upper screw feeders are located adjacent to its sides.

In order to accommodate the lower screw feeders and optional cutters fixed thereto, the bottom of the hopper is shaped complementarily to a portion of the revolution surface generated by the motion of said screw feeders.

Although the above described type of truck has been in use for many years, it has been found to have some drawbacks.

The main drawback is that material stagnation regions form inside the hopper during use; the material, by packing and entangling itself more and more as processing continues, can create considerable hindrance to the rotation of the screw feeders.

Furthermore, the movement of the material produced by the lower screw feeders and by the upper screw feeders produces a motion of said material that is not fully satisfactory, since it does not ensure an optimum degree or mixing of the components of which said material is constituted.

As a partial solution to the above mentioned drawbacks, more recently produced trucks have adopted a wide range of devices for avoiding stagnations, such as rakes and other equivalent means adapted to prevent the material from becoming entangled around the screw feeder thus improving the mixing flows thereof.

Although these solutions produce some improvement, they have not eliminated the basic problems of known trucks.

The aim of the present invention is to provide an improved truck that eliminates the above described drawbacks of known types.

In relation to this aim, an object of the present invention is to provide an improved truck that is structurally simple and can be manufactured with known technologies.

Another object of the present invention is to provide a truck requiring, for its optimum operation, a power level that is competitive with respect to the one required by known types.

Another object of the present invention is to provide a truck requiring limited maintenance and in which said maintenance, if required, can be performed by unskilled personnel.

Another object of the present invention is to provide a truck the cost whereof is competitive with respect to known truck types.

This aim, these objects, and others which will become apparent hereinafter are achieved by an improved truck for breaking up, shredding, mixing, and distributing cylindrical and/or prism-shaped bales of forage and straw or grass ensiled products, according to the invention, which comprises a chassis movable by means of wheels and on which a hopper-like container is placed, a plurality of screw feeders being coupled inside said container so as to be rotatable about corresponding ends, characterized in that at least one of said screw feeders has at least two regions the respective helical blades whereof have mutually opposite winding directions.

Further characteristics and advantages of the invention will become apparent from the description of an embodiment thereof, illustrated only by way of nonlimitative example in the accompanying drawings, wherein:
figure 1 is a partially cutout axonometric view of an improved truck according to the invention;
figure 2 is a transverse sectional view of the improved truck according to the invention;
figure 3 is a partially cutout view of a detail of the improved truck according to the invention;
figure 4 is a transverse sectional view of the detail related to figure 3 of the improved truck according to the invention;
figure 5 is another transverse sectional view of the detail related to figure 3 of the improved truck according to the invention;
figure 6 is an axonometric view of another detail of the improved truck according to the invention;
figure 7 is a view of another detail of the improved truck according to the invention.

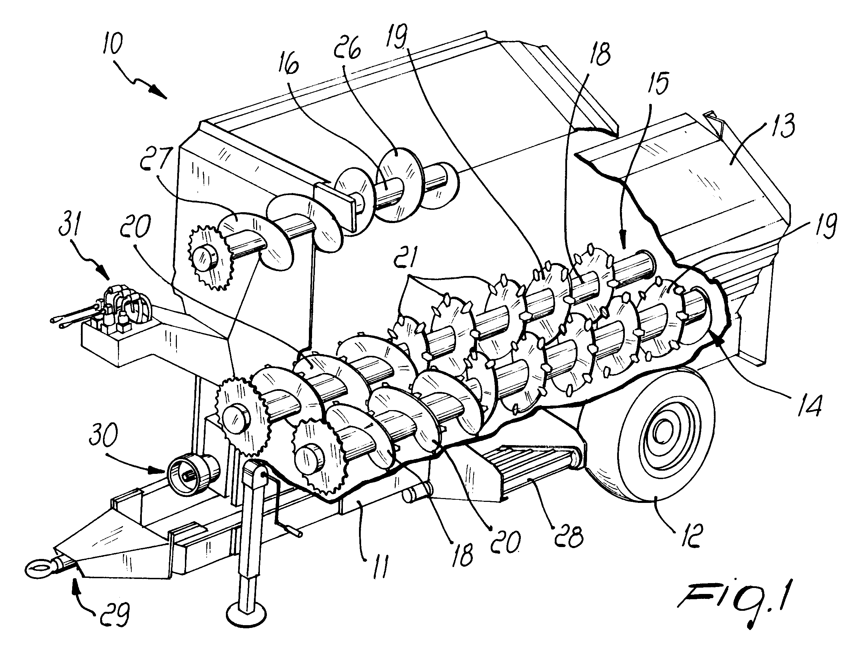

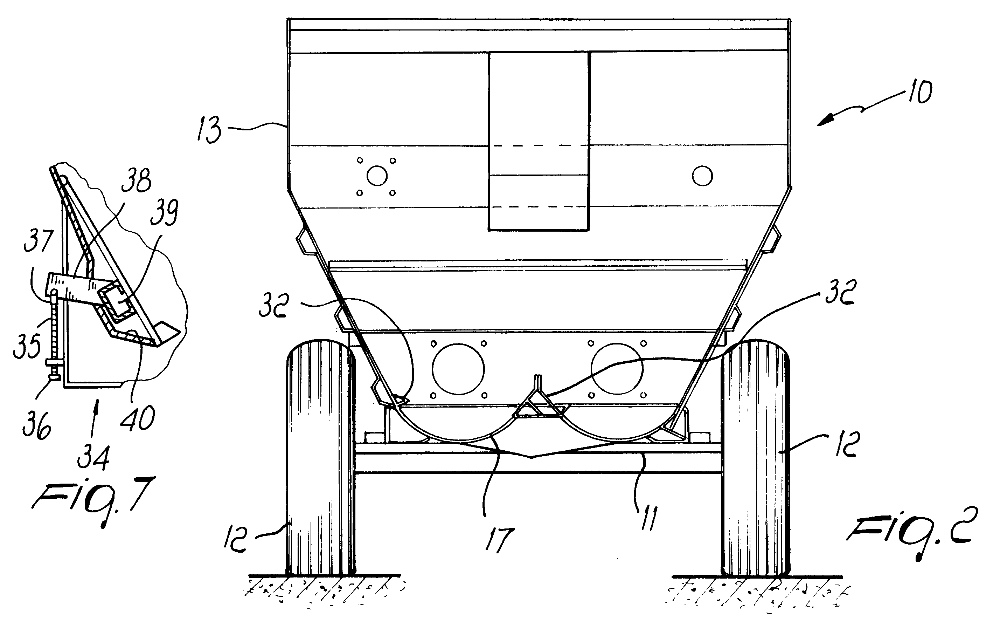

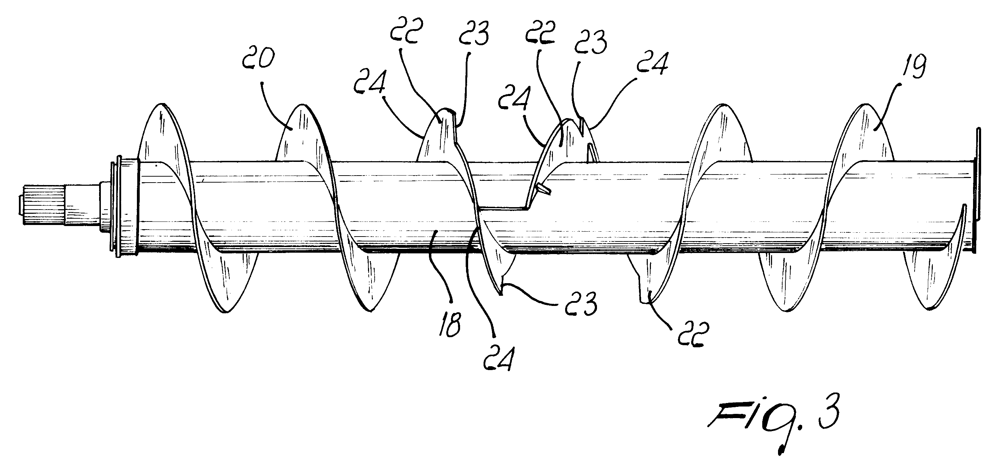

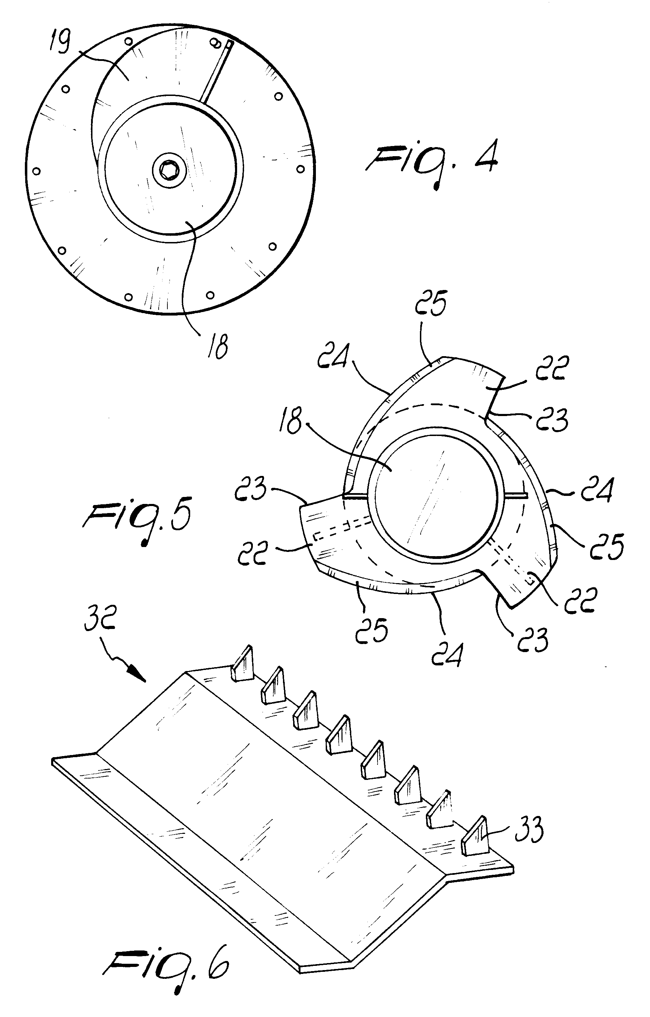

With reference to figures 1 to 6, an improved truck according to the invention is generally designated by the reference numeral 10.

The truck 10 comprises, on a chassis 11 movable by means of wheels 12, a hopper-like container 13 inside which three screw feeders, designated by the reference numerals 14 to 16, are rotatably coupled at their corresponding ends.

The screw feeders 14 to 16 all have mutually parallel rotation axes and are arranged along the longitudinal direction of the truck 10.

With particular reference to the screw feeders 14 and 15, said screw feeders are located proximate to a bottom 17 of the container 13.

The screw feeder 16 is instead arranged in the upper part of the container 13 and adjacent to an internal lateral surface thereof.

The screw feeders 14 and 15 are substantially identical to each other in their structure.

Each one of the screw feeders 14 and 15 comprises a shaft 18 the ends whereof are rotatably coupled to the container 13.

Each one of the shafts 18 has two regions that can be distinguished from each other owing to the fact that respective helical blades 19 and 20 have corresponding mutually opposite winding directions; the region related to the blade 20, located at the front part of the truck 10, is shorter than the region related to the blade 19, located in the rear and central part of said truck 10.

In particular, a plurality of cutters 21 are fixed proximate to the active edge of each one of the blades 19.

Furthermore, as regards both the blade 20 and the blade 19, there are portions, in this case located substantially in the central part of the corresponding shaft 18, which are shaped so that each one forms, again in this case, three consecutive shaped sectors 22, each one of which has a radial portion 23 and a curved portion 24 that forms a cutting edge 25.

As regards the screw feeder 16, it is substantially shorter than the screw feeders 14 and 15, allowing to load giant bales from the rear of the container 13.

The screw feeder 16 furthermore has two regions that can be distinguished from each other by virtue of the fact that their corresponding helical blades 26 and 27 have mutually opposite winding directions; the region related to the blade 27, which is located at the front with respect to the truck 10, is longer than the region related to the blade 26, which is located to the rear, and is shorter than the regions related to the blades 20 of the screw feeders 14 and 15.

The improved truck 10 has an outlet 28 on the opposite side with respect to the one related to the screw feeder 16 and in a lower and centered position with respect to the region where the blades 26 and 27 join.

The figures show means 29 for coupling to the tractor, a power take-off 30 also for coupling to the tractor, and a control panel 31.

Rakes 32 are also fixed to the container 13 at the screw feeders 14 and 15; during processing, their teeth 33 cooperate, without interfering, with the corresponding blades 19 and 20 of each one of the screw feeders 14 and 15.

Each one of said rakes 32 can be positioned in an adjustable manner by means of a corresponding mechanism 34 (for example for compensating for the wear of the teeth 33).

Each one of said mechanisms 34 is constituted, in this case, by a threaded element 35 which is externally supported by the container 13 and has one end 36 that can be actuated by the operator; the other end 37 is instead pivoted to one end, arranged outside the container 13, of a lever arm 38 that is in turn pivoted to said container 13 in an intermediate point.

The lever arm 38 has a tubular element 39 transversely rigidly coupled to the end lying opposite to the one engaged with the threaded element 35; said tubular element has a square cross-section, and the corresponding rake 32 rests longitudinally thereon.

The tubular element 39 is accommodated in a channel 40 provided longitudinally inside the container 13.

As regards the above described mechanisms 34, it is evident that the movement of the threaded element 35 causes the consequent (oscillating) movement of the lever arm 38 and ultimately of the element 39, which in turn pushes the corresponding rake 32 against the corresponding screw feeder 14 or 15.

This manoeuver is performed by first loosening and then tightening the screws for fixing the rake 32 to the container 13.

In particular, it has been observed that the intended aim and objects have been achieved; by providing blade portions with mutually opposite winding directions on a same screw feeder, it is possible to apply to the material inside the hopper circular motions that facilitate the mixing of said material.

It should also be stressed that the upper screw feeder thus shaped and located avoids stagnation and packing of the material in what experience has now identified as a critical spot.

It should also be noted that the general structure of the truck allows to place the outlet in a substantially central region of said truck.

The present invention is susceptible of numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Improved truck for breaking up, shredding, mixing, and distributing cylindrical and/or prism-shaped bales of forage and straw or grass ensiled products, comprising a chassis (11) that is movable by means of wheels (12) and on which a hopper-like container (13) is placed, a plurality of screw feeders (14,15,16) being coupled inside said container (13) so as to be rotatable about corresponding ends, characterized in that at least one of said screw feeders has at least two regions the respective helical blades (19,20) whereof have mutually opposite winding directions.

2. Improved truck according to claim 1, characterized in that it comprises one or more rakes (32) connected in regions adjacent to at least one of said plurality of screw feeders (14,15,16).

3. Improved truck according to claim 2, characterized in that it comprises a plurality of rakes (32) located in regions adjacent to the lower screw feeders (14,15).

4. Improved truck according to one or more of the preceding claims, characterized in that said one or more rakes (32) are connected to said container (13) in preset regions.

5. Improved truck according to one or more of the preceding claims, characterized in that it comprises, for each one of said rakes (32), a movement mechanism (34) compensating for the wear of the teeth (33) of said rakes (32).

6. Improved truck according to claim 5, characterized in that said movement mechanism (34) comprises a threaded element (35) that is supported externally by said container (13) and has an end (36) actuatable by the operator, the other end (37) being pivoted to one end, located outside said container, of a lever arm (38) that is in turn pivoted in an intermediate point to said container, said lever arm (38) having a tubular element (39) that is transversely rigidly coupled to its other end, said tubular element (39) having a square cross-section, one of said rakes (32) resting longitudinally thereon.

7. Improved truck according to one or more of the preceding claims, characterized in that at least one of said multiple screw feeders (14,15,16) has blade portions that are shaped so as to form one or more consecutive shaped sectors (22).

8. Improved truck according to claim 7, characterized in that each one of said shaped sectors (22) has a radial portion (23) and a curved portion (24) that forms a cutting edge (25).

9. Improved truck according to one or more of the preceding claims, characterized in that it comprises three screw feeders (14,15,16).

10. Improved truck according to claim 9, characterized in that two lower screw feeders (14,15) of said set of three are located proximate to the bottom (17) of said container (13).

11. Improved truck according to one or more of the preceding claims, characterized in that the corresponding regions of said lower screw feeders (14,15) lying at the front, with respect to said container and relative to a winding direction of said blades (19,20), are shorter than the rear regions related to the opposite winding direction.

12. Improved truck according to claim 9, characterized in that an upper one (16) of said three screw feeders (14,15,16) is located proximate to an internal surface of said container (13).

13. Improved truck according to claim 12, characterized in that said upper screw feeder (16) is located proximate to the opposite side of said container (13) with respect to the side where an outlet (28) is located.

14. Improved truck according to claim 13, characterized in that said upper screw feeder (16) is located in the front part of said container (13).

15. Improved truck according to claim 12, characterized in that said upper screw feeder (16) is shorter than said lower screw feeders (14,15) and in any case has a length that allows to load giant bales from the rear of said truck (1).

16. Improved truck according to one or more of the preceding claims, characterized in that said upper screw feeder (16) has a front region related to a winding direction of said blade (19,20) that is longer than the other one but nonetheless shorter than the length of the shorter regions, related to a winding direction of said blade (19,20), of the lower screw feeders (14,15), with respect to which it is arranged concordantly.

17. Improved truck according to one or more of the preceding claims, characterized in that said outlet (28) is arranged laterally to said container (13) in a region that substantially coincides with the region related to the connecting point of the two mutually opposite winding directions of the lower screw feeders (14,15).
